Europäisches Patentamt

European Patent Office

Office européen des brevets

(19)

(11) Veröffentlichungsnummer: **0 157 940**
B1

(12)

# EUROPÄISCHE PATENTSCHRIFT

(45) Veröffentlichungstag der Patentschrift:
08.03.89

(21) Anmeldenummer: 84115949.4

(22) Anmeldetag: 20.12.84

(51) Int. Cl.⁴: **H 01 G 4/38,** H 01 G 1/11,
H 02 H 7/16, H 01 G 1/02

(54) Kondensatoranlage für die Anwendung im schlagwettergefährdeten Bergbau.

(30) Priorität: 23.03.84 DE 3410843

(43) Veröffentlichungstag der Anmeldung:
16.10.85 Patentblatt 85/42

(45) Bekanntmachung des Hinweises auf die Patenterteilung:
08.03.89 Patentblatt 89/10

(84) Benannte Vertragsstaaten:
BE DE FR GB IT

(56) Entgegenhaltungen:
DE-A-2 624 724
DE-A-3 029 177
US-A-2 810 865

(73) Patentinhaber: Roederstein Spezialfabriken für Bauelemente der Elektronik und Kondensatoren der Starkstromtechnik GmbH, Ludmillastrasse 23/25, D-8300 Landshut (DE)

(72) Erfinder: Huber, Robert, Ing., Max- Reger- Strasse 3, D-8303 Rottenburg (DE)

(74) Vertreter: Patentanwälte Viering & Jentschura, Steinsdorfstrasse 6, D-8000 München 22 (DE)

EP 0 157 940 B1

LIBER, STOCKHOLM 1989

## Beschreibung

Die Erfindung betrifft eine Kondensatoranlage für die Anwendung im schlagwettergefährdeten Bergbau, mit einer Mehrzahl von zusammengeschalteten Kondensatoren.

An Kondensatoranlagen, die im schlagwettergefährdeten Bergbau betrieben werden, sind besonders hohe Sicherheitsanforderungen zu stellen. Insbesondere können Kondensatoren mit brennbaren Tränkmitteln für den Betrieb unter Tage im schlagwettergefährdeten Bereich nicht zugelassen werden. Unbrennbare Tränkmittel hingegen sind durch ihre Halogenierung nicht für selbstheilende Kondensatoren geeignet. Darüberhinaus sind derartige Flüssigkeiten umweltbelastend und neigen bei Hitzeeinwirkung zur Entstehung von Ultragiften. Völlig trockene, jedoch unvergossene Kondensatoren weisen hingegen besonders bei höheren Nennisolationsspannungen einen hohen inneren Wärmewiderstand auf und können daher nicht hinreichend kompakt zu Kondensatoranlagen zusammengebaut werden. Außerdem wird bei solchen Trockenkondensatoren durch das Fehlen eines Tränkmittels die Löschung des Schaltlichtbogens erschwert.

Ferner muß für Kondensatoranlagen, insbesondere wenn sie im schlagwettergefährdeten Bergbau betrieben werden, durch entsprechende Sicherungen ein zuverlässiges Abschalten der Kondensatoranlage gewährleistet sein, falls unzulässige Betriebszustände auftreten. Mit selbstheilenden Kondensatoren kann zwar dafür gesorgt werden, daß ein Teil von elektrischen Durchschlägen durch die selbstheilenden Eigenschaften der Kondensatoren unschädlich ist. Jedoch können auch nichtselbstheilende Durchschläge auftreten, auf die den Kondensatoren vorgeschaltete übliche Sicherungen wegen des beim Auftreten eines nichtselbstheilenden Durchschlags verbleibenden relativ hohen Fehlerwiderstandes nur in seltenen Fällen und in einem sehr fortgeschrittenen Fehlerstadium ansprechen können. Trockene, jedoch unvergossene Kondensatoren können zwar mit Abreißsicherungen ausgestattet werden, die jedoch auf ihre Funktionstüchtigkeit nicht geprüft werden können, weil ihre Auslösung gleichzeitig eine Zerstörung des Kondensators herbeiführt.

Durch die Erfindung wird die Aufgabe gelöst, eine mit Niederspannung und Mittelspannung betreibbare Leistungs-Kondensatoranlage zu schaffen, die sich für den Betrieb im schlagwettergefährdeten Bergbau eignet und bei welcher besonders das Auftreten nichtselbstheilender Durchschläge zuverlässig und frühzeitig überwacht werden kann.

Dies wird erfindungsgemäß durch die Merkmale der Kondensatoranlage gemäß dem Anspruch 1 erreicht. Aus der DE-A-3 029 177 ist eine Drehstromkondensatoranlage bekannt, die wie in Stern geschaltete Gruppen mit je drei Kondensator - Wickelelementen umfaßt, oder Sternpunkte über zwei Leitungen mit einem Strom- oder Spannungswandler verbunden wird. Auf der Einsatz von Tränkmittelfreien, selbstheilenden Kondensatoren wird in dieser Druckschrift nicht eingegangen.

Da die Kondensatoren erfindungsgemäß tränkmittelfrei sind, entfallen für die erfindungsgemäße Kondensatoranlage brennbare oder umweltbelastende Tränkmittel. Durch den erfindungsgemäß verwendeten Vollverguß der selbstheilenden Kondensatoren werden niedrige innere Wärmewiderstände erreicht, so daß ein kompakter Aufbau der Kondensatoranlage ermöglicht ist. Außerdem ergibt sich durch das Vergießen der Kondensatoren neben einer hohen Isolationsfestigkeit eine extreme mechanische Festigkeit gegen Stoß- und Rüttelbeanspruchungen.

Darüberhinaus aber können durch das erfindungsgemäße Zusammenschalten der Kondensatoren zu einer Symmetrievergleichsschaltung besonders nichtheilende Durchschläge frühzeitig festgestellt werden, so daß die fehlerhafte Kondensatoranlage frühzeitig abgeschaltet werden kann, bevor das Gehäuse beschädigt wird. Symmetrievergleichsschaltungen bei Kondensatoranlagen sind zwar an sich, nicht aber bei selbstheilenden vergossenen Kondensatoren bekannt. Es wurde überraschend gefunden, daß bei selbstheilenden vergossenen Kondensatoren gemäß der Erfindung durch die Symmetrieüberwachung das Auftreten nichtselbstheilender Durchschläge zuverlässig festgestellt werden kann. Im Normalbetrieb einer erfindungsgemäßen Kondensatoranlage liegen die Unsymmetrieströme bzw. Unsymmetriespannungen, die an den Symmetrievergleichspunkten abgegriffen werden, unter zwei Prozent des Betriebsstromes bzw. der Phasenspannung. Beim Auftreten eines nichtselbstheilenden Durchschlags hingegen erreichen die dabei auftretenden Unsymmetrieströme bzw. Unsymmetriespannungen Werte in der Größenordnung der Betriebsströme bzw. -spannungen, wodurch Abweichungen vom ungestörten Betriebszustand mittels Signaleinrichtungen der angeschlossenen Symmetrie-Oberwachungsschaltung bereits bei einem sehr niedrigen Fehlerpegel erfaßt werden können und daher die fehlerhafte Kondensatoranlage aufgrund des Ansprechens der Signaleinrichtungen frühzeitig abgeschaltet werden kann.

Als Symmetrievergleichsschaltung, in welcher die Kondensatoren zusammengeschaltet sind, wird eine Doppelsternschaltung bevorzugt, deren beiden Sternpunkte als die Vergleichspunkte aus dem Gehäuse der Kondensatoranlage herausgeführt sind. Als Symmetrievergleichsschaltung kann jedoch auch eine entsprechend ausgeführte Brückenschaltung verwendet werden.

Als Symmetrie-Oberwachungsschaltung, die an den beiden aus dem Gehäuse der Kondensatoranlage herausgeführten Symmetrievergleichspunkt-Anschlüssen angeschlossen wird, kann eine für den Zweck der Symmetrieüberwachung an sich bekannte Überwachungsschaltung verwendet werden. Wenngleich es möglich ist, tränkmittelfreie, selbstheilende Kondensatoren, die in gesonderten Gehäusen vergossen sind, mittels einer äußeren Symmetrievergleichsschaltung zusammenzuschalten und dadurch gemeinsam zu überwachen, wird es erfindungsgemäß vorgezogen, die Kondensatoren in einem ihnen gemeinsamen Gehäuse zu einer inneren Symmetrievergleichsschaltung zusammengeschaltet anzuordnen.

Als Vergußmaterial, mit welchem die Kondensatoren vergossen sind, kann ein an sich bekanntes Vergußmaterial angewendet werden, welches zum feuchtigkeits- und luftdichten Einschließen der Kondensatoren geeignet ist, die erforderlichen elektrischen Isolationseigenschaften aufweist und zu einer Wärmeableitung an das Gehäuse geeignet ist. Bevorzugt wird als Vergußmaterial ein Polyurethanharzmaterial angewendet.

Die Kondensatoren können in dem metallischen Gehäuse der Kondensatoranlage bis zum Vergießen mittels an sich bekannter elektrisch isolierender Abstandshalter isoliert angeordnet sein. Bevorzugt wird jedoch als Abstandshalter ein zwischen der Gehäusewand und der Kondensatoranordnung angeordnetes, diese umschließendes Abstandsgitter aus einem Kunststoff-Isoliermaterial angewendet. Insbesondere in diesem Fall kann zusätzlich zu der Symmetrieüberwachung eine definierte Isolationsüberwachung auf Isolationsfehler der elektrischen Innenbestandteile der Kondensatoranlage zum metallischen Kondensatorgehäuse mit Hilfe einer für diesen Zweck an sich bekannten derartigen Schutzeinrichtung einbezogen werden. Durch eine derartige Isolationsüberwachung wird die Kondensatoranlage bei einem Isolationsfehler zum Gehäuse ohne das Auftreten von Kurzschlußströmen abgeschaltet. Als Material für das Kunststoff-Isoliermaterial wird ein Polypropylenmaterial bevorzugt, welches im übrigen auch als Dielektrikum der gewickelten, mit aufgedampften selbstheilenden Belägen ausgestatteten Kondensatoren bevorzugt verwendet wird.

Das metallische Gehäuse der Kondensatoranlage besteht bevorzugt aus einem Stahlblechmaterial. Das Stahlblech-Gehäuse soll das Austreten eines Fehlerlichtbogens bei einem Kurzschluß zwischen den Phasen der Kondensatoranlage verhindern. Entsprechend groß soll die Blechstärke des Stahlblechmaterials gewählt werden. Vorzugsweise zusätzlich ist außerdem die Kondensatoranlage in einem Schlagwetter-Schutzgehäuse angeordnet.

Als weitere Ergänzung der erfindungsgemäß vorgesehenen Schutzmaßnahmen können in die Kondensatoranlage Temperaturfühler eingebaut sein. Außerdem können in Reihe zu der Kondensatoranlage liegende Schmelzsicherungen zur Begrenzung des Energieumsatzes an der Fehlerstelle bei dem Auftreten eines Kurzschlusses zwischen den Phasen vorgesehen sein. Derartige Schmelzsicherungen können auch in die Kondensatoranlage eingebaut sein.

Wie bereits erwähnt, können die Kondensatoren wenigstens teilweise auch außerhalb des oder eines Gehäuses zu der Symmetrievergleichsschaltung zusammengeschaltet sein. Beispielsweise können alle Kondensatoren zwar in einem gemeinsamen Gehäuse vergossen sein, ihre Anschlüsse jedoch gesondert aus dem Gehäuse herausgeführt sein, so daß die Symmetrievergleichsschaltung selbst außerhalb des Vergußgehäuses ausgebildet ist. Hierbei besteht auch die Möglichkeit, die Kondensatoren zu anderen Schaltungen zusammenzuschalten. Ferner können die Kondensatoren einzeln oder gruppenweise in gesonderten Gehäusen vergossen sein. Insbesondere können zwei Kondensatorgruppen, die in zwei gesonderten Gehäusen vergossen sind, jeweils innerhalb ihres Gehäuses zu einer Einzelsternschaltung zusammengeschaltet sein, wobei außer den Phasenanschlüssen auch jeweils die Sternpunkte der Einzelsternschaltungen aus dem betreffenden Gehäuse herausgeführt sind und die Phasenanschlüsse außerhalb des Gehäuses unter Ausbildung der Doppelsternschaltung zusammengeschaltet werden. Entsprechend ist es auch möglich, die Kondensatoren jeder Phase der Doppelsternschaltung als Gruppen in einem gesonderten Gehäuse zu vergießen und außerhalb der Gehäuse zu der Doppelsternschaltung zusammenzuschalten.

Wenngleich die vorstehenden Ausführungsformen auf die bevorzugte Ausbildung der Symmetrievergleichsschaltung als Doppelsternschaltung Bezug nehmen, stehen diese Ausführungsformen analog auch für die Ausbildung der Symmetrievergleichsschaltung als Brückenschaltung.

Die Erfindung wird anhand von Ausführungsbeispielen einer erfindungsgemäßen Kondensatoranlage erläutert, die aus der Zeichnung ersichtlich ist. In der Zeichnung zeigt:

Fig. 1 eine Frontansicht der Kondensatoranlage mit schematisch angegebener Schaltung, zu der die Kondensatoren zusammengeschaltet sind,

Fig. 2 die Seitenansicht der Kondensatoranlage aus Fig. 1, und

Fig. 3 eine Draufsicht auf eine andere Ausführungsform der Kondensatoranlage.

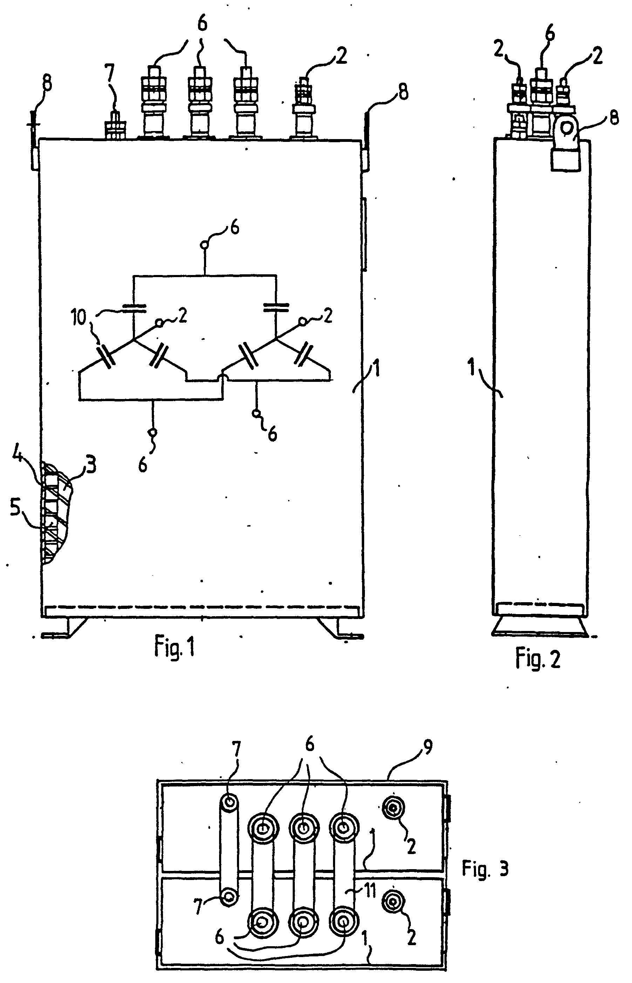

Bei der in der Zeichnung gezeigten Kondensatoranlage zur Anwendung im schlagwettergefährdeten Bergbau und für damit vergleichbare Anwendungsfälle sind insgesamt 18 untereinander gleiche, tränkmittelfreie, selbstheilende Wickelkondensatoren in einem gemeinsamen Gehäuse 1 dreiphasig zu einer Symmetrievergleichsschaltung zusammengeschaltet, die im Ausführungsbeispiel in Fig. 1 als Doppelsternschaltung dargestellt ist, bei welcher je Phase jeder Einzelsternschaltung drei Kondensator parallelgeschaltet sind (in der schematischen Schaltung in Fig. 1 sind diese drei parallelgeschalteten Kondensatoren als nur ein Kondensator (10) dargestellt) und deren als Symmetrievergleichspunkte dienenden beiden Sternpunkte zu den auf dem Gehäusedeckel sitzenden beiden Symmetrievergleichs-Anschlußklemmen 2 ausgeführt sind. Die drei Phasen der Kondensatorschaltung sind zu den ebenfalls am Gehäusedeckel sitzenden Phasenklemmen 6 geführt, an dem außerdem noch der Erdungsanschluß 7 angeordnet ist.

Die Kondensatoren sind aus Kunststoff-Folienbändern, im Ausführungsbeispiel aus Polypropylen, als Dielektrikum mit aufgedampften selbstheilenden Belägen gewickelt. Die zu der Symmetrievergleichsschaltung zusammengeschalteten Kondensatoren sind einschließlich ihrer Schaltschienen in einem Abstandsgitter 5 zusammengepackt in dem Gehäuse 1 mit einem Kunstharz-Vergußmaterial 3 luft- und feuchtigkeitsdicht vergossen angeordnet. Im Ausführungsbeispiel , bei welcher die Nennspannung der Kondensatoranlage 550 V und deren Blindleistung 70 kVar beträgt, bestehen das Vergußmaterial aus Polyurethan, das an der Innenseite der Gehäusewand 4 anliegende Abstandsgitter 5 aus Polypropylen bei einer Gitterdicke von 4 mm und das Gehäuse, dessen Abmessungen 345 x 105 x 550 mm sind, aus Stahlblech mit einer Blechstärke von 1,5 mm.

Das Vergußmaterial 3 dient zur Isolation zwischen den Phasen der Kondensatorschaltung und zwischen dieser und dem Gehäuse 1, zur Kapselung der einzelnen Kondesatorwickel und zur Wärmeableitung. Außerdem ergibt der Vollverguß des Kondensators neben einer hohen Isolationsfestigkeit eine extrem hohe mechanische Festigkeit der Kondensatoranlage gegen Stoß- und Rüttelbeanspruchungen.

Die Kondensatoren der gezeigten Kondensatoranlage weisen keine inneren Schutzschaltelemente auf. Die Kondensatoranlage weist niedrige innere Wärmewiderstände auf und kann aufgrund ihres Aufbaus durch äußere Schutzeinrichtungen geschützt werden, die hinsichtlich ihrer Funktionstüchtigkeit und Ansprechempfindlichkeit prüfbar sind.

Als äußere Schutzeinrichtung kann an die Symmetrievergleichs-Anschlußklemmen 2 einen Symmetrieüberwachungsschaltung angeschlossen werden, durch welche aufgrund eines nichtselbstheilenden Durchschlags auftretende Unsymmetrieströme bzw. -spannungen durch entsprechende Detektoren erfaßt und daraufhin die Kondensatoranlage abgeschaltet werden kann.

Ferner kann als äußere Schutzeinrichtung zwischen die Phasenklemmen 6 und/oder die Vergleichsanschlußklemmen 2 und das Gehäuse 1, welches hierzu mit Gehäuseanschlußlaschen 8 ausgestattet ist, eine Isolationsüberwachungsschaltung mit einem Ansprechwert von beispielsweise 2 bis 20 Kiloohm angeschlossen werden, so daß beim Auftreten eines Isolationsfehlers zum Gehäuse die Kondensatoranlage ohne ein Auftreten von Kurzschlußströmen abgeschaltet werden kann.

Den Phasenklemmen 6 können Schmelzsicherungen als Schutz beim Auftreten eines Kurzschlusses zwischen den Phasen vorgeschaltet werden. Hierbei wird durch das Gehäuse 1 aus Stahlblechmaterial das Austreten des Fehlerlichtbogens verhindert. Zusätzlich kann die gesamte Kondensatoranlage in ein Schlagwetter-Schutzgehäuse eingebaut werden.

Im übrigen können in die Kondensatoranlage Temperaturfühler eingebaut werden, die in eine äußere Temperaturüberwachungsschaltung eingeschaltet werden, durch welche die Kondensatoranlage beim Auftreten einer unzulässig hohen Temperatur abgeschaltet wird.

Bei der Ausführungsform aus Fig. 3 ist jeweils eine Gruppe von Kondensatoren, die zu einer Einzelsternschaltung zusammengeschaltet sind, in einem gesonderten Gehäuse 1 vergossen angeordnet. Die beiden Gehäuse 1 sind in einem gemeinsamen Außenkasten 9 zusammengebaut. Die Erdungsanschlüsse 7 und die Phasenanschlüsse 6 der Kondensatorgruppen sind außerhalb der Gehäuse über Schaltschienen 11 zu der Doppelsternschaltung entsprechend Fig. 1 zusammengeschaltet, während an den beiden an die Sternpunkte der Einzelsternschaltung angeschlossenen Klemmen 2 die Symmetrievergleichs-Überwachungsschaltung angeschlossen werden kann.

**Patentansprüche**

1. Kondensatoranlage für die Anwendung im schlagwettergefährdeten Bergbau, mit einer Mehrzahl von zusammengeschalteten Kondensatoren, wobei die tränkmittelfreien, selbstheilenden Kondensatoren (10) in wenigstens einem Gehäuse (1) mit einem Kunststoffmaterial feuchtigkeits- und luftdicht vergossen sind und in einer als Doppelsternschaltung oder Brückenschaltung ausgeführten Symmetrievergleichsschaltung zusammengeschaltet sind, an deren Symmetrievergleichspunkte eine Symmetrie-Überwachungsschalt ung anschließbar ist.

2. Kondensatoranlage nach Anspruch 1, dadurch gekennzeichnet, daß die Kondensatoren (10) in einem ihnen gemeinsamen Gehäuse (7) vergossen angeordnet sind.

3. Kondensatoranlage nach Anspruch 2, dadurch gekennzeichnet, daß das Vergußmaterial (3) ein Polyurethanharzmaterial ist.

4. Kondensatoranlage nach Anspruch 2 oder 3, dadurch gekennzeichnet, daß zwischen der Gehäusewand (4) und von der Kondensatoranordnung ein Abstandsgitter (5) aus einem Kunststoff-Isoliermaterial angeordnet ist.

5. Kondensatoranlage nach einem der Ansprüche 1 bis 4, dadurch gekennzeichnet, daß an wenistens eine der Phasenklemmen (6) und/oder der Symmetrievergleichs-Anschlußklemmen (2) einerseits und an das Gehäuse (1) andererseits eine Isolationsüberwachungs-Schutzschaltung angeschlossen ist.

6. Kondensatoranlage nach einem der Ansprüche 1 bis 5, dadurch gekennzeichnet, daß das Gehäuse (1) aus einem Stahlblechmaterial besteht.

7. Kondensatoranlage nach einem der Ansprüche 1 bis 6, gekennzeichnet durch die Anordnung in einem Schlagwetter-Schutzgehäuse.

8. Kondensatoranlage nach einem der Ansprüche 1 bis 7, dadurch gekennzeichnet, daß Temperaturfühler eingebaut sind.

9. Kondensatoranlage nach einem der Ansprüche 1 bis 8, dadurch gekennzeichnet, daß an die Phasenklemmen (6) innere oder äußere Schmelzsicherungen angeschlossen sind.

10. Kondensatoranlage nach Anspruch 1, dadurch gekennzeichnet, daß die Kondensatoren (10) außerhalb des oder eines Gehäuses (1) zu der Symmetrievergleichsschaltung zusammengeschaltet sind.

11. Kondensatoranlage nach Anspruch 1, dadurch gekennzeichnet, daß die Kondensatoren (10) einzeln oder gruppenweise in gesonderten Gehäusen (1) vergossen sind.

## Claims

1. Capacitor installation for the use in gassy mining, comprising a plurality of capacitors connected together, wherein the self-healing capacitors (10) free from impregnating fluid are water- and air-tightly casted in at least one housing (1) with a synthetic material and are connected together for a balance comparator circuit formed as double star circuit or bridge circuit, at the balance check points of which a balance control circuit can be connected.

2. Capacitor installation according to claims 1, characterized in that the capacitor (10) are arranged casted in a common housing (1).

3. Capacitor installation according to claim 2, characterized in that the casting medium (3) is a polyurethane medium.

4. Capacitor installation according to claim 2 or 3, characterized in that between the housing wall (4) and the capacitors there is a spacer grid (5) of synthetic insulating material.

5. Capacitor installation according to one of claims 1 to 4, characterized in that an insulation control protection circuit is connected to at least one of the phase terminals (6) and/or the ballance comparator connection terminals (2) on the one hand and to the housing (1) on the other hand.

6. Capacitor installation according to one of claims 1 to 5, characterized in that the housing (1) is made of steel plate material.

7. Capacitor installation according to one of claims 1 to 6, characterized by being arranged in a firedamp protection housing.

8. Capacitor installation according to one of claims 1 to 8, characterized in that temperature sensors are built in.

9. Capacitor installation according to one of claims 1 to 8, charaterized in that inside or outside safety fuses are connected to the phase terminals (6).

10. Capacitor installation according to claim 1, charaterized in that the capacitors (10) are connected together outside the or an housing (1) for the balance comparator circuit.

11. Capacitor installation according to claim 1, characterized in that the capacitors (10) are casted one by one or in groups in separate housings (1).

## Revendications

1. Installation de condensateurs destinée à être employée dans une mine grisouteuse comportant plusieurs condensateurs connectés entre eux, les condensateurs à régénération exempts de produit d'imprégnation (10) recevant dans au moins un carter (1) de la résine coulée constituée par un matériau de synthèse de façon à être étanches à l'humidité et à l'air et étant connectés entre eux pour former un circuit symétrique de comparaison réalisé sous la forme d'un circuit en double étoile ou sous la forme d'un circuit en pont aux points symétriques de comparaison duquel peut être branché un circuit de surveillance de symétrie.

2. Installation de condensateurs selon la revendication 1, caractérisée en ce que les condensateurs (10) sont disposés par coulée dans un carter commun (1).

3. Installation de condensateurs selon la revendication 2, caractérisée en ce que le matériau de coulée (3) est un polyuréthane.

4. Installation de condensateurs selon la revendication 2 ou 3, caractérisée en ce qu'entre la paroi du carter (4) et le dispositif des condensateurs se trouve placée une grille de maintien à distance (5) constituée par un matériau isolant de matière plastique.

5. Installation de condensateurs selon une des revendications 1 à 4, caractérisée en ce que l'on raccorde un circuit de protection de surveillance de l'isolation à au moins une des bornes de phase (6) et/ou des bornes de branchement (2) du circuit symétrique de comparaison d'une part et au carter (1) d'autre part.

6. Installation de condensateurs selon une des revendications 1 à 5, caractérisée en ce que le carter (1) est constitué par de la tôle d'acier.

7. Installation de condensateurs selon une des revendications 1 à 6, caractérisée en ce qu'elle est disposée dans une cage de protection anti-grisou.

8. Installation de condensateurs selon une des revendications 1 à 7, caractérisée en ce que l'on incorpore des détecteurs de température.

9. Installation de condensateurs selon une des revendications 1 à 8, caractérisée en ce que des coupe-circuits fusibles internes ou externes sont branchés sur les bornes de phase (6).

10. Installation de condensateurs selon la revendication 1, caractérisé en ce que les condensateurs (10) sont connectés ensemble pour former le circuit symétrique de comparaison à l'extérieur du carter (1) ou d'un carter (1).

11. Installation de condensateurs selon la revendication 1, caractérisé en ce que les condensateurs (10) sont coulés, soit individuellement, soit par groupes dans des carters séparés (1).

Fig. 1

Fig. 2

Fig. 3